# EUROPEAN PATENT APPLICATION

(11) **EP 4 786 122 A1**
(43) Date of publication of application: **05.08.2026**
(21) Application number: 25154838.4
(22) Date of filing: 29.01.2025
(51) Int. Cl.: B26D 1/46, B23D 57/00, B24B 27/06, B26D 1/547, B28D 1/08, B28D 5/04

(54) **CUTTING A HOLLOW CORE GLASS PREFORM**

(71) Applicant: Microsoft Technology Licensing, LLC, Redmond, WA 98052 (US)
(72) Inventor: PETROVICH, Marco, Redmond, 98052 (US); BAWN, Simon Michael, Redmond, 98052 (US); SANDOGHCHI, Seyed Reza, Redmond, 98052 (US); HOOPER, Lucy Ellen, Redmond, 98052 (US); CHEN, Yong, Redmond, 98052 (US); SUSLOV, Dmytro, Redmond, 98052 (US); SAKR, Hesham Abdelmonem Elgharib, Redmond, 98052 (US); RAYNAL, Guillaume, Redmond, 98052 (US)
(74) Representative: CMS Cameron McKenna Nabarro Olswang LLP

(57) **Abstract**

A method for processing a glass preform for hollow core fiber comprises providing a length of glass preform for hollow core fiber from which a portion is to be removed in order to terminate the preform forming an end face. The preform comprises a transverse cross-sectional structure comprising a hollow core surrounded by a plurality of capillaries defining a plurality of voids encased by a jacket tube, wherein the hollow core and the plurality of voids extend longitudinally along the length of the preform. The method further comprises positioning the preform using a preform holder attached to a diamond wire saw, wherein the preform holder is configured to clamp the preform equally on both sides of a desired location for cutting. The preform is cut in the desired location using the diamond wire saw.

## Description

### BACKGROUND

Optical fibers conventionally refer to solid core optical fibers, comprising an annular outer cladding surrounding an inner circular core with a raised index of refraction. Solid core fibers are fabricated by "drawing down" a rigid glass preform having a cross-sectional structure matching the intended refractive index profile of the finished fiber, but with a width many times that of the finished fiber. For example a 250 mm diameter preform may be drawn into a 125 micrometer fiber. The glass preform is softened with heat, and then pulled or drawn from one end to scale down its cross section. In fiber drawing, preforms are fed into a furnace at slow feed rate and drawn into fiber at very fast speeds. Sometimes, a "cane" of narrower diameter is drawn firstly from the preform, and separated from the preform to be subsequently drawn into a fiber after an additional outer cladding is provided.

Recently a new class of optical fibers called hollow core fibers (HCFs) has been developed. Light is guided in a hollow central core, rather than in solid glass. The transmission loss of HCFs is mainly determined by the design, geometry and longitudinal uniformity of the microstructure of the fiber. Hollow core fibers are also made by drawing down a suitable hollow core preform, either directly or through a two-step process in which a cane is initially drawn and then overclad with a glass tube and further drawn into fiber.

The embodiments described below are not limited to implementations which solve any or all of the disadvantages of known methods for preparing hollow core preforms or canes.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

During drawing down of a preform, an end face of the preform is coupled to a pressurization system. Described herein are methods and systems for preparing an end face of the preform which is high quality, is flat, and formed in a manner such that no voids into the preform are interconnected and to reduce excess stress in the preform.

A method for processing a glass preform for hollow core fiber comprises providing a length of glass preform for hollow core fiber from which a portion is to be removed in order to terminate the preform forming an end face. The preform comprises a transverse cross-sectional structure comprising a hollow core surrounded by a plurality of capillaries defining a plurality of voids encased by a jacket tube, wherein the hollow core and the plurality of voids extend longitudinally along the length of the preform. The method further comprises positioning the preform using a preform holder attached to a diamond wire saw, wherein the preform holder is configured to clamp the preform equally on both sides of a desired location for cutting. The preform is cut in the desired location using the diamond wire saw.

A system for forming an end face of a glass preform comprises a diamond wire saw and a preform holder. The preform comprises a transverse cross-sectional structure comprising a hollow core surrounded by a plurality of capillaries defining a plurality of voids encased by a jacket tube, wherein the hollow core and the plurality of voids extend longitudinally along the length of the preform. The preform holder is attached to the diamond wire saw and the preform holder is configured to clamp the preform equally on both sides of a desired cutting location.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic transverse cross-sectional view of an antiresonant hollow core fiber;
FIG. 2 is a schematic transverse cross-sectional view of a nested antiresonant hollow core fiber;
FIG. 3 is a schematic transverse cross-sectional view of a double nested antiresonant hollow core fiber; FIG. 4A is a schematic transverse cross-sectional view of an example preform;
FIG. 4B is a schematic side view of an example preform;
FIG. 4C is a schematic diagram showing how an end face of a preform is produced by dividing a length of preform into a first part and a second part;
FIG. 5 is a schematic diagram showing a schematic transverse cross-sectional view of an example preform comprising an inner microstructure and a jacket tube;
FIG. 6 is a schematic diagram showing apparatus for cutting a glass preform to form an end face;
FIG.s 7A and 7B are schematic diagrams of an example preform holder;
FIG. 8 is a schematic diagram depicting a process for making a preliminary annular cut in a jacket tube of a preform;
FIG. 9 is a flow diagram of a method for forming an end face of a glass preform using a diamond wire saw; and
FIG. 10 is a flow diagram of a method for making a first annular cut into a jacket tube of a glass preform using a glass saw.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

The present invention relates to methods for preparing hollow core preforms for producing hollow core optical fibers. Hollow core fibers are made by drawing down a suitable hollow core preform, either directly or through a two-step process in which a narrower preform or cane is initially drawn and then overclad with a glass tube and further drawn into fiber. A cane is a type of preform produced by drawing down a preform and then overclad with a glass tube before being further drawn down into a fiber.

As used herein a preform is understood to encompass preforms with a larger (sometimes substantially larger) width compared to the hollow core optical fiber that is drawn from it. In other words, the term preform is understood to encompass a cane as defined above. A cane is a type of preform. For example, the preform may be a large initial preform which is yet to be drawn into a thinner preform or cane. This large initial preform may have a diameter of at least 50 mm. In other examples, it may have a diameter of at least 100 mm, and in further examples the preform has a diameter of up to 250 mm. In other examples, the preform may have already been drawn into a cane or thinner preform which has an intermediate thickness between the large initial preform and the thickness of the hollow core optical fiber. The outer diameter of the cane may be between 0.5 and 20 mm. In other examples, the outer diameter of the cane may be between 10 mm and 50 mm. The term "preform" as used herein therefore covers a preform which is yet to be drawn, as well as a thinner preform which may also be referred to as a cane, which has already been drawn from a preform and is to be further drawn into a fiber either as is or after a second solid glass jacket is provided around the cane.

In hollow core optical fibers (HCFs), light is guided through a longitudinal hollow central core, rather than in solid glass as is the case for solid core fibers. Typically, a hollow core fiber includes a longitudinal hole surrounded by a plurality of longitudinal voids extending along the fiber length. Compared to solid core fibers, hollow core fibers provide benefits such as reduced loss from both absorption and scattering, increased propagation speed and reduced nonlinear interactions making hollow core optical fiber very attractive for use in applications such as telecommunications.

Loss of HCFs is mainly determined by the design, geometry and longitudinal uniformity of the microstructure. Hollow core fibers can be made by drawing down a preform or a cane formed with the desired cross-sectional profile. So that the desired geometrical structure may be achieved, pressure is applied to voids during drawing of the fiber from a preform or cane. The pressurization counteracts surface tension in the softened glass which otherwise can cause collapse of the voids and destruction of the intended structure.

Pressurization is provided by a pressurization system coupled to an end face of the preform or cane during drawing down of the fiber. The end face is coupled to the pressurization system. Methods disclosed herein provide ways to prepare an end face of a preform or cane before coupling to the pressurization system during drawing of a hollow core fiber.

Two classes of hollow core fibers include the hollow core photonic band gap fiber (HC-PBGF or HCPBGF which is sometimes referred to as hollow core photonic crystal fiber, HC-PCF or HCPCF) and antiresonant hollow core fiber (AR-HCR or ARF). The methods and systems described herein are applicable to both classes of hollow core fiber, as well as to any class of hollow core fiber comprising any microstructured cladding enabling light to travel in a hollow core.

Hollow core photonic band gap fibers in various examples include a structured, inner, cladding comprising a substantially regular closely packed array of many small glass capillaries (defining the longitudinal voids) from which a central group is excluded to define substantially circular hollow core. The periodicity of the cladding structure provides a periodically structured refractive index and hence a photonic bandgap effect that confines the propagating optical wave towards the core. This is the fundamental optical mode or fundamental mode (FM). One or more higher-order optical modes or higher-order modes (HOMs) may be supported in the core and/or the cladding.

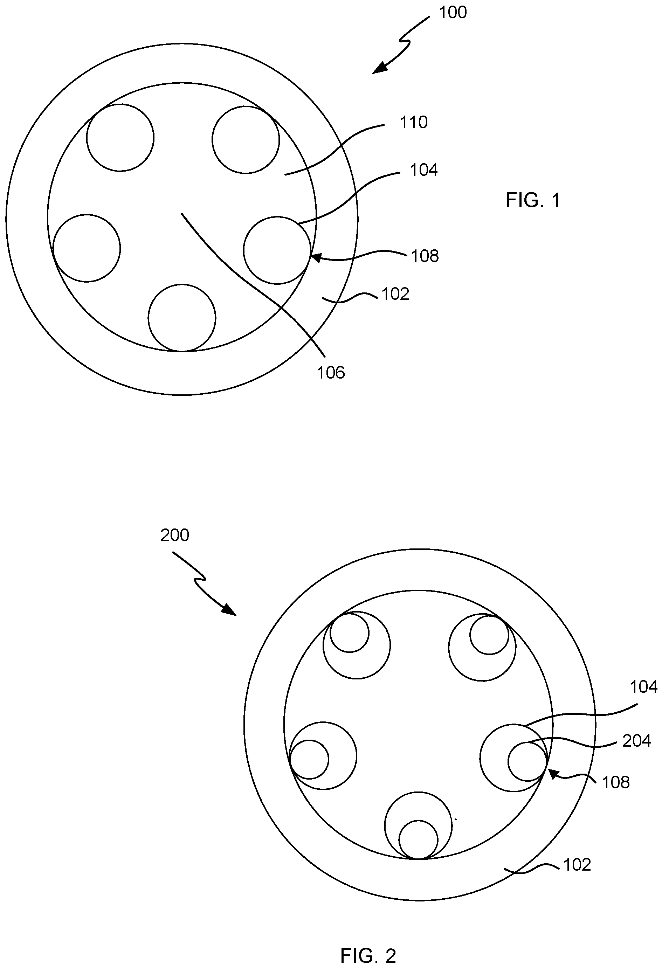

FIG.s 1-3 show transverse cross-sectional views of three different examples of antiresonant hollow core fibers (ARFs). Light is guided in these fibers by an antiresonant optical effect. Each of the fibers 100, 200, 300 comprises a tubular outer cladding 102, a structured, inner, cladding comprising a plurality of tubular cladding capillaries 104, 204, 304 and a hollow core 106. The outer cladding 102 has a glass thickness that is typically much larger than that of the cladding capillaries 104, 204, 304. In the first example, shown in FIG. 1, the structured, inner, cladding comprises five capillaries 104 of the same cross-sectional size and shape, which are arranged inside the outer cladding 102 in a single ring so that the longitudinal axes of each cladding capillary 104 and of the outer cladding 102 are substantially parallel. Each cladding capillary 104 is in contact with (e.g. bonded to) the inner surface of the outer cladding 102 at an azimuthal location 108, such that the cladding capillaries 104 are evenly spaced around the inner circumference of the outer cladding 102, and are also spaced apart from each other by gaps 110 (i.e. such that there is no contact between neighbouring capillaries). In some designs of ARF, the cladding capillaries 104 may be positioned in contact with each other (in other words, not spaced apart as in FIG. 1), but spacing to eliminate this contact can improve the fiber's optical performance. The gaps 110 remove nodes that arise at the contact points between adjacent tubes and which tend to cause resonances that result in high losses and degradation of other transmission properties of the hollow core fiber, such as the ability to essentially transmit a single transverse optical mode. Accordingly, fibers with spaced-apart cladding capillaries may be referred to as "nodeless antiresonant hollow core fibers".

The arrangement of the cladding capillaries 104 in a ring around the inside of the tubular outer cladding 102 creates a central space, cavity, or void within the fiber, also with its longitudinal axis parallel to those of the outer cladding 102 and the cladding capillaries 104, which is the fiber's hollow core 106. The hollow core 106 is bounded by the inwardly facing parts of the outer surfaces of the cladding capillaries 104. This is the core boundary, and the material (glass or polymer, for example) of the capillary walls that make up this boundary provides the required antiresonance optical guidance effect or mechanism. The cladding capillaries 104 have a thickness, t, at the core boundary which defines the wavelength for which antiresonant optical guiding occurs in the ARF.

In the second example, shown in FIG. 2, each primary cladding capillary 104 has a secondary, smaller capillary 204 nested inside it, bonded to the inner surface of the primary cladding capillary 104, in this example at the same azimuthal location 108 as the point of bonding between the primary cladding capillary 104 and the outer cladding 102. These additional smaller capillaries 204 can reduce the optical loss. ARF designs of this type, with secondary capillaries, may be referred to as "nested antiresonant nodeless fibers" (NANFs) (TM).

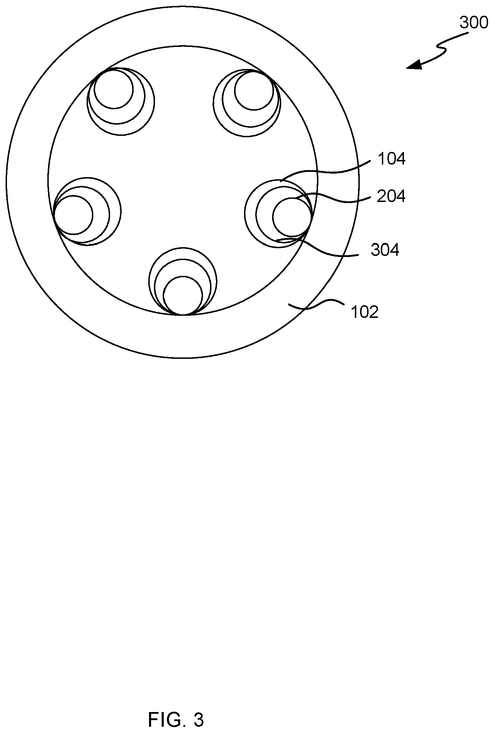

The third example, shown in FIG. 3, has two smaller cladding capillaries 204, 304 nested inside each cladding capillary 104. As with the example shown in FIG. 2, each of the smaller capillaries 204, 304 is bonded to the inner surface of the immediately larger capillary at the same azimuthal location as the point of bonding between the primary cladding capillary 104 and the outer cladding 102. In this example, the smaller capillary 304 may be referred to as the secondary cladding capillary and the smallest capillary 204 may be referred to as the tertiary cladding capillary. The tertiary cladding capillary 204 is bonded to the inner surface of the secondary cladding capillary 304 and the secondary cladding capillary 304 is bonded to the inner surface of the primary cladding capillary 104. ARF designs of this type, with secondary and tertiary cladding capillaries may be referred to as "double-nested antiresonant nodeless fibers" (DNANFs). In yet further examples (not shown in the drawings) there may be a different configuration of cladding capillaries. For example, there may be smaller further capillaries, within the tertiary capillary 204 to provide further levels of nesting and/or there may be a plurality of secondary cladding capillaries within each primary cladding capillary, each secondary cladding capillary being bonded to the inner surface of the primary cladding capillary at a different azimuthal location and/or each primary cladding capillary may have an internal structure (e.g. one or more dividing walls).

All of the examples shown in FIG.s. 1-3 comprise five primary cladding capillaries 104 and hence have five-fold rotational symmetry. Furthermore, all the cladding capillaries are circular in cross-section. In other examples, there may be a different number of primary cladding capillaries surrounding the core (e.g. four, six, seven, eight, nine or ten) and/or the cladding capillaries may not be of circular cross-section. Additionally, whilst in the examples of FIG.s. 1-3, all the primary cladding capillaries 104 are of the same size and shape, in other examples, the primary cladding capillaries within the outer cladding 102 may not all be the same size and/or shape.

Figures 1-3 are merely examples of ARFs, and many other ARF structures are known. The disclosure is not limited to the examples described above and methods described herein are applicable to ARFs and hollow core photonic band gap fibers (HC-PBGF).

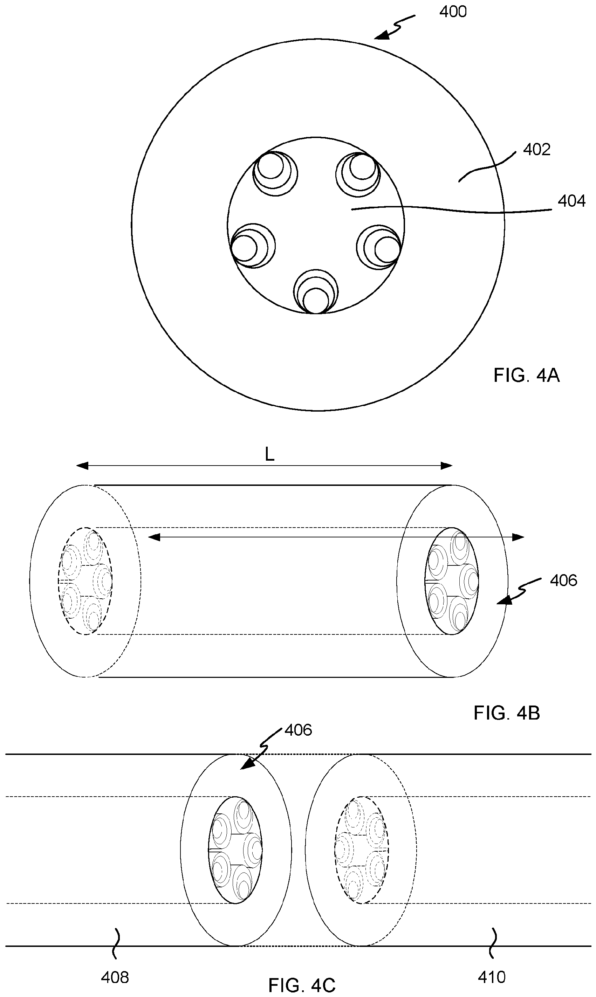

As described above, HCFs such as those depicted in FIG.s. 1-3 are made by drawing down a preform with the desired cross-sectional profile. FIG.s. 4A-C are schematic diagrams showing various aspects of an example preform. FIG. 4A depicts a cross-section of an example preform 400. The example preform comprises an inner microstructure 404 and jacket tube 402. Inner microstructure 404 includes nested hollow glass capillaries arranged around the interior of the jacket tube 402. Once drawn, the inner microstructure 404 forms the inner cladding of the hollow core fiber and the jacket tube 402 forms the outer cladding of the hollow core fiber. The example preform 400 will form a hollow core fiber similar to that depicted in FIG. 3 once drawn. The jacket tube 402 may vary in size between preforms. The jacket tube in various examples is 10 to 100 mm in diameter; in other examples, the jacket tube may be 25 to 250 mm. In further examples, the jacket tube is further covered by an outer jacket surrounding the jacket tube 402.

As described above, the term preform as used herein covers a preform which is yet to be drawn, as well as a thinner preform which may also be referred to as a cane, which has already been drawn from a preform and is to be further drawn into a fiber either as is or after a second solid glass jacket is provided around the cane.

FIG. 4B is a schematic diagram showing a side view of the example preform shown in FIG. 4A. The preform has a length L and an end face 406. An end face is an end of the preform which, during drawing, is coupled to a pressurization system. Methods disclosed herein relate to the preparation of an end face such an end face 406.

FIG. 4C is a schematic diagram showing how an end face such as 406 of a preform such as 400 may be formed. A length of preform is divided into a first part 408 and a second part 410. End face 406 of the first part 408 is formed by the division. The division may in some scenarios be called a termination, when the second part is discarded. Ways to divide (or terminate) the preform to form an end face are described herein.

As disclosed herein, a preform end face is prepared in such a way that the end face couples to a pressurization system during drawing. While drawing down from a preform, the relative positions of the tubes are maintained and their relative sizes and wall thicknesses are modified in order to achieve the target fiber structure. Pressure differentials between different groups of components can be used to control the fiber structure by inflating or deflating the components compared to the shape they would adopt without pressure differentials. Differentials are maintained by the pressurization system which is coupled to the preform end face.

In order to couple to the pressurization system, the preform end face is flat, i.e. the end of the jacket tube and the end of each capillary in the microstructure lie in a plane perpendicular to the central axis of the preform. The preform end face is also formed in a manner such that no voids inside the preform are interconnected, as this may lead to leaks between different voids and structural control would not be possible. Furthermore, if excess stress is introduced to the preform microstructure during termination, then mechanical failure may occur during drawing. Excess stress may also be introduced to the preform during assembly of the preform and pressurization system. Mechanical failure severely reduces draw yield and the preform is unrecoverable. Division or end-termination processes can affect the likelihood of mechanical failure during the drawing process.

The pressurization system may be connected to the preform end face using a plurality of channels which are fed into the different voids in the inner microstructure of the preform. Additionally, a seal may be created between the end face of the preform and the pressure interface of the pressurization system. The quality of the preform end face can affect the formation of this seal.

Depending on the draw speed, the drawing process may take several hours, during which uniform pressures are maintained in order to result in a uniform fiber structure. If the connection or coupling between the preform end face and the pressurization system is leaky, stress may be induced on the preform caused by heat from the furnace. Stress may cause the end face to crack. Microstructures are particularly susceptible to cracking. Cracks can negatively impact the stability of the fiber drawing process, affecting the resulting fiber structure and in some circumstances causing longitudinal variation or complete collapse of the structure.

During drawing, the preform is heated by a furnace to a temperature suitable for softening the preform material. Part of the heat applied to one extremity of the preform can be transmitted through radiation to the other end of the preform, that is preform end face coupled to the pressurization system via a pressure interface. Qualities of the preform end face determine the effect of the transmitted heat on the integrity of the preform and how it is transferred out of the preform into the pressure interface.

Techniques described herein for forming an end face of a preform such as end face 406 result in an end face with qualities suitable for coupling to a pressurization system. Such an end face is flat, clean of debris or other contamination, free of microcracks or other damage, and free of stress. Optionally, the end face may have a patterned surface for effective heat distribution. The disclosed methods can improve hollow core optical fiber fabrication yield and quality. An end face prepared via the disclosed methods means that a stable pressure feed into the preform is obtained reducing the probability of mechanical failure during fiber drawing.

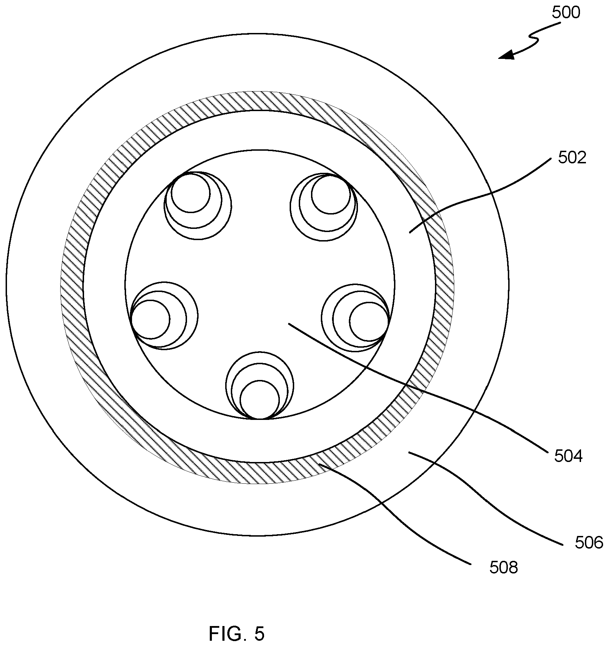

FIG. 5 is a schematic diagram showing a schematic transverse cross-sectional view of an example preform 500. Like example preform 400, example preform 500 comprises an inner microstructure 504 and jacket tube 502. Inner microstructure 504 includes nested hollow glass capillaries arranged around the interior of the jacket tube 502 which will form the outer cladding of the hollow core fiber once drawn. Preform 500 further comprises an outer jacket 506 surrounding the jacket tube 502. The outer jacket 506 defines a cavity 508 between the jacket tube 502 and the outer jacket 506. In other examples, the outer jacket 506 may be fused to the jacket tube 502.

Various scenarios described herein include cutting a preform using a diamond wire saw. The diamond wire saw comprises a diamond wire formed from a wire embedded with diamond beads or dust. The diamond wire moves against the preform to make a cut. In various scenarios tension is applied to the diamond wire using a tensioning weight. A diamond wire saw further comprises a motor. In various example scenarios the diamond wire is wound around a drum attached to the motor such that the motor drives movement of the diamond wire.

Conventional methods of cutting a preform involve mechanical cleaving. In such methods, a notch or score is formed in the outer glass surface (e.g. in the outer jacket) and then tensile stress is induced adjacent to the notch, where the amount of induced tensile stress is in excess of the tensile strength of the glass. When cleaving a hollow core fiber preform (unlike when cleaving a solid core fiber preform), the release of the tensile stress during cleaving can cause unpredictable damage to the inner microstructure. Unlike where cleaving is used, the methods described herein do not involve inducing tensile stress into the glass and as a result the operation is more controlled and repeatable.

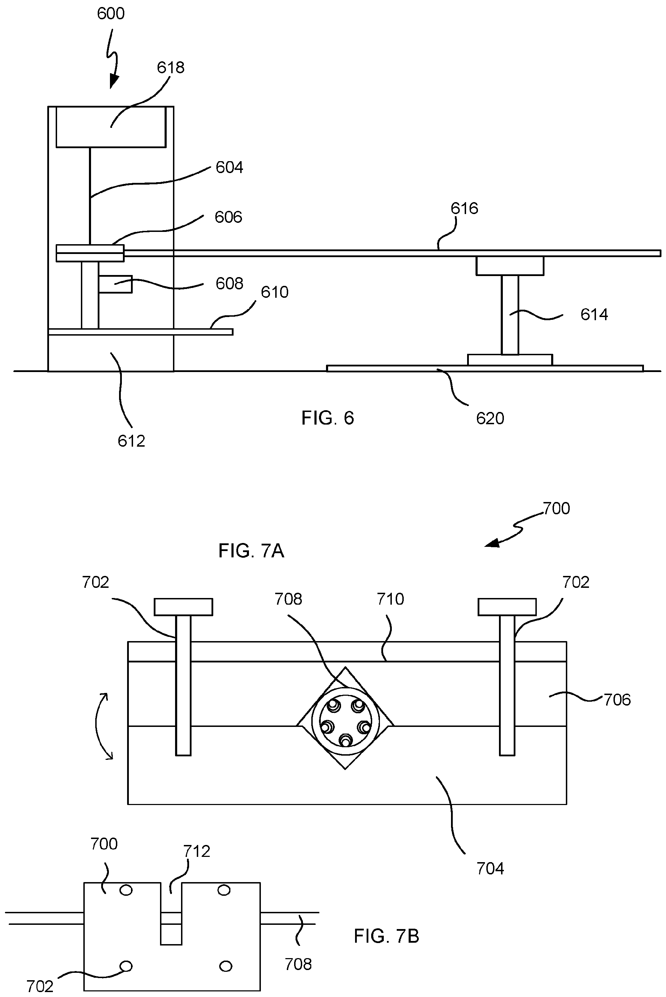

FIG. 6 is a schematic diagram showing apparatus for cutting a glass preform to form (in other words produce) an end face comprising a diamond wire saw 600. The diamond wire saw comprises a diamond wire 604 for cutting the preform 616, and a motor 618. Motor 618 is attached to the diamond wire via a drum (not shown). A tensioning weight 608 is to provide tension in the diamond wire. The diamond wire saw 600 further comprises a lower housing 612. The schematic diagram in FIG. 6 shows a preform 616 positioned for cutting and forming and end face thereof. Preform 616 is held in a preform holder 606 which is positioned on a rail 610. Preform 616 is also supported by a preform stand 614, which holds some of the weight of the preform to prevent strain in the preform. Preform stand 614 is positioned on a second rail 620 so that the stand 614 may move along the rail. The preform stand and preform holder support the preform and keep the preform straight. If the preform is not straight i.e. the preform is bent before cutting, then tension in the preform as a result of the bending will be released during cutting. The release of tension may damage the microstructure. In various examples, there are multiple preform stands similar to stand 614 for providing support to the preform. Preform holder 606 holds the preform in place firmly without subjecting the preform to high uniaxial stress which may deform the preform. The apparatus is arranged such that the outer surface of the preform is orthogonal to the cutting element e.g. the diamond wire.

Once the preform is positioned, the saw is positioned in a starting position. The wire is allowed to fall onto the preform to make contact with the preform. The motion of the wire, caused by the motor 618, cuts through the preform. The wire may move up and down, reversing direction periodically. In other examples, the wire may move continuously in a single direction driven by the motor. In various examples, the saw when triggered automatically moves translationally towards the preform while the wire is moving so as to cut through the preform. In other examples, the wire may be replaced by a blade made of any type of high hardness material.

In various examples, a diamond wire is selected for the diamond wire saw. The diamond wire has a thickness (diameter) and a grain size. The grain size is smaller than the wire thickness. The selected thickness of the wire in some examples is 50 - 300 micrometers. In further examples, selected wire thickness is: 80 - 200 micrometers, 130 - 150 micrometers, 150 micrometers, or 100 - 300 micrometers.

In examples the selected grain size is 5 - 80 micrometers. In further examples, selected grain size is 20 - 50 micrometers, 20 - 30 micrometers, 30 - 80 micrometers, 20 - 80 micrometers, 15 - 80 micrometers, 20 - 50 micrometers, 15 micrometers, or 30 micrometers. Selected grain size is smaller than selected wire thickness. In a particular example selected wire thickness is 150 micrometers and selected grain size is 15 micrometers.

In examples, a motor speed between 0.1- 10 meters per second is selected. In further examples, selected motor speed is: 0.1 - 3.6 meters per second, 2.1 - 2.2 meters per second, 1.5 - 1.6 meters per second, 0.1 - 5 meters per second, 0.1 - 3 meters per second, 1.6 - 5 meters per second, 0.6 - 3.6 meters per second, 10 meters per second, 9.5 - 10.5 meters per second, 5.1 - 10 meters per second, or 6.1 - 9 meters per second.

In examples, a tensioning weight with a mass between 0 and 3 kilograms is selected. A weight with a mass of 0 kilograms corresponds to the absence of a weight. In further examples, selected tensioning weight mass is: 1 kilograms, 0.3 kilograms, or 0.05 - 2 kilograms, 0 - 2 kilograms, 3 kilograms, 0 kilograms, 2-3 kilograms, 1.5 - 3 kilograms, or 2.5 - 3.5 kilograms.

In various examples, the wire comprises a resin bond. In other examples, diamond grains are welded to the wire.

Parameters are selected such that the selected wire produces a high-quality end face and such that the wire is reliable with a long lifetime. The combination of wire thickness 50 - 300 micrometers, grain size 15 - 80 micrometers, motor speed 0.1 - 10 meters per second and tensioning weight 0 - 3 kg when used to cut a preform to form an end face, results in an end face which is suitable for coupling to the pressurization system. The end face is high quality, is flat, and formed in a manner such that no voids into the preform are interconnected and to reduce excess stress in the preform.

It is to be understood that any suitable combination of wire thickness, grain size, motor speed, and tensioning weight mass in any of the ranges mentioned above may be used to cut a preform using a diamond wire where the grain size is smaller than the wire thickness.

In scenarios, parameters are selected depending on preform diameter. The selected wire also depends on the outer diameter of the preform and geometry of the microstructure such as the thickness of the glass struts in the microstructure.

A particular example for cutting a preform with an outer diameter of at least 50 mm includes selecting a wire with a diameter of 50 - 300 micrometers and a grain size of 15 - 80 micrometers, selecting a motor speed of 1.6 - 5 meters per second, and selecting a tensioning weight with a mass of 1 kilogram.

Another example for cutting a preform with an outer diameter of 0.5 - 20 mm includes selecting a wire with a diameter of 50 - 300 micrometers and a grain size of 15 - 80 micrometers, selecting a motor speed of 0.6 - 3.6 meters per second, and selecting no tensioning weight.

In further scenarios, other types of saw may be used to cut a preform including but not limited to: disc saw, linear saw. Cutting elements in various scenarios may comprise tungsten carbide and/or aluminum carbide.

To form an end face, the diamond wire is orthogonal to the central axis of the preform. In order to provide this orthogonality, a tilt angle of the preform holder may be adjusted. The tilt angle may be adjusted to compensate for the initial positioning of the preform and preform holder. For example, if the initial preform positioning results in the central axis of the preform being 5 degrees away from orthogonal to the wire of the wire saw or other cutting element. For example, the angle between the wire and the central axis is 95 degrees and not 90 degrees. The preform holder may be tilted by a tilt angle of 5 degrees so that the angle between the wire and the central axis is 90 degrees. The tilt angle of the preform holder may be adjusted by tilting the lower housing 612 attached to the preform holder. In various examples the tilt angle is between 0 degrees and 10 degrees.

FIG.s 7A and 7B are schematic diagrams of an example preform holder 700 which is an example of preform holder 606 in FIG. 6. In FIG. 7A the preform holder 700 is shown in side view holding a preform 708 and in FIG. 7B the preform holder 700 is shown from above. In various examples the preform holder comprises a base 704 including a V-shaped groove for resting the preform on. In some examples the base 704 is made out of metal. In FIG. 7 the base 704 is hingedly attached to a lid. In various examples the lid comprises a rubber or other soft material layer 706, which deforms in order to hold the preform securely without causing damage or applying excessive uniaxial stress. As shown in FIG. 7, the rubber layer includes a V-shaped groove. The combination of the two V-shaped grooves, maintains the position of the preform during the sawing operation and prevents lateral or vertical movement. A metal top part 710 of the lid covers the rubber layer 706 in various examples. Screws 702 are positioned to secure the lid and base of the preform holder together. This provides a clamping force on the preform. The clamping force is strong enough to hold the preform firmly in place but not strong enough to risk damaging the microstructure. As shown in FIG. 7B, the preform holder 700 includes a cut-out 712 in the middle to enable the wire of the wire saw to be brought into contact with the preform. The design of the preform holder 700 with this central cut-out 712 ensures that the preform is clamped equally on both sides of the cutting position and prevents any movement of the preform during cutting that might otherwise cause damage to the microstructure. In other further examples not shown in FIG. 7, the rubber layer does not include a V-shaped groove but the rubber layer is shaped flat such that when the lid is secured to the base of the preform holder the preform is pressed into the V-shaped groove of the base.

In various examples, once a cut has been made to create an end-face, debris is cleaned from the end face. Cleaning debris from the end face improves coupling between the end face and the pressurization system. Debris is cleaned for example using a purge gas jet or vacuum suction. A gas jet is for example placed 5 cm away from the end face and used to clean the end face by rotating the preform. Methods described herein reduce the amount of debris which is produced during cutting because of the selected wire parameters (for example wire diameter and grain size). The selected wires result in less debris being generated and therefore less debris to clean, making the cleaning process faster.

In various examples, the preform end face is textured for example using laser patterning. A patterned surface of the end face may mean that radiative heat from the furnace used during drawing can be scattered out from the preform more effectively (e.g. through the pressure interface). During a typical draw, the perform is placed in the furnace which is operated at very high temperatures which produces a large amount of radiative heat. Infrared (IR) radiation can travel along the glass preform to the end face, where it may cause localized heating and cause stress in the glass. This may result in mechanical failure of the glass. Surface patterning at the end face or proximal to the end face provides a way to scatter infrared out of the preform, or to ensure it is directed to sections of the pressure interface where heat can be dissipated away without causing additional stress in the glass. IR radiation scattered out can be collected by heat sinks or other similar actively cooled arrangements within the pressure interface. Providing a patterned surface at or proximal to the end face allows IR radiation to be directed more efficiently to the heat sinks provided, thereby reducing the possibility of cracks appearing in the preform.

In some scenarios, a preform such as preform 400 comprises a relatively thick jacket tube 402 compared to the thickness of the tubes forming the inner microstructure 404. As used herein a relatively thick jacket tube 402 is a jacket tube where the inner diameter of the jacket tube is around half the size or less of the outer diameter of the jacket tube. By comparison, tubes forming the inner structure comprise an inner diameter which is around 65% or more of the outer diameter. Where the jacket tube is thick, a preliminary cut is sometimes made into the jacket tube using a glass saw before cutting through the remaining jacket tube and the microstructure using a diamond wire saw. A glass saw is a saw suitable for cutting glass which typically comprises a circular cutting blade. The circular cutting blade is made from a hard, abrasive material such as diamond composite or carbide. The glass saw may include a translationally moving carriage with a rotating holder which facilitates a precise and annular cut to be made into the preform. In some other examples, the blade may be a linear blade which the preform is moved translationally towards the blade to make a cut. In further examples, the blade may be annular in shape and may rotate eccentrically around the preform, which stays in place, in order to make a cut.

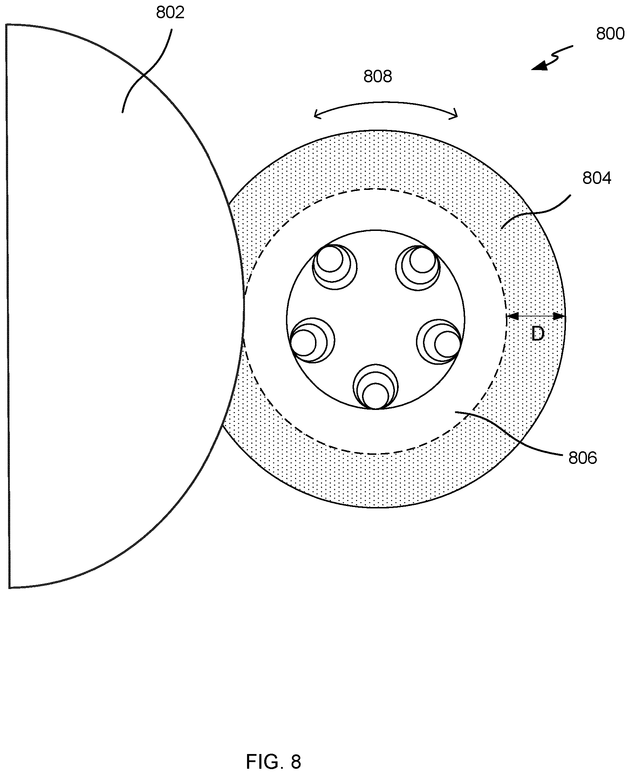

FIG. 8 is a schematic diagram depicting a process for making a preliminary annular cut in a jacket tube of a preform. Preform 800 is shown with a jacket tube and microstructure similar to preform 400 shown in FIG. 4A. A blade of a glass saw 802 makes a cut 804 into the jacket tube of the preform. A cross sectional view is provided showing the jacket tube of the preform including an inner portion 806 which is not cut into. Cut 804 has a depth D. For example depth D is determined based on determining that the inner portion 806 which is not cut into has a thickness between 1 mm and 50 mm. The inner portion 806 is not cut into using the glass saw in order to protect the microstructure. In further examples depth D is determined using another suitable method. Using a diamond wire saw to cut the fragile microstructure reduces risk of damage to the microstructure. Using a glass saw to make a preliminary cut into the jacket tube of the preform means that there is less glass for the diamond wire saw to cut through. This results in a better quality cut because less force needs to be applied to the delicate inner structure. The preliminary cut also makes the cutting process and more efficient and faster because of the finite lifetime of diamond wire. One wire may not be useable for long enough to cut fully through a preform with a thick jacket tube.

Operating a glass saw involves using a cooling liquid during the cutting process to dissipate heat generated by the cutting. In some examples the cooling liquid is an emulsion. In order to protect the preform from damage caused by the cooling liquid, one or both ends of the preform are covered with a seal. In various examples the seal comprises silicon rubber and/or PTFE tape. A portion of the outer side of the jacket tube is covered with a cover e.g. plastic sheeting or a plastic bag. The portion of the jacket tube which is covered is any part of the jacket tube which would otherwise come into contact with cooling liquid.

Cut 804 is made into the jacket tube of preform 800 by placing the preform into contact with the glass saw, and cutting into the jacket tube using the saw to a depth D. The preform is rotated as indicated by arrow 808, either clockwise or anticlockwise in order to make annular cut 804 with depth D. While the cut is made, the preform is positioned on the glass saw table (not shown) and may be held in place manually or may be held in place and rotated by use of a mechanical jig.

Once preliminary cut 804 has been made, various scenarios include removing the cover from the preform and then cleaning the outer side of the jacket tube using a solvent. The solvent may comprise one or more of: acetone, isopropyl alcohol ethanol, methanol, DI (distilled water) or any other suitable solvent. The seal is also removed and the exposed first cut portion of the preform is cleaned using a solvent such as acetone or isopropyl alcohol.

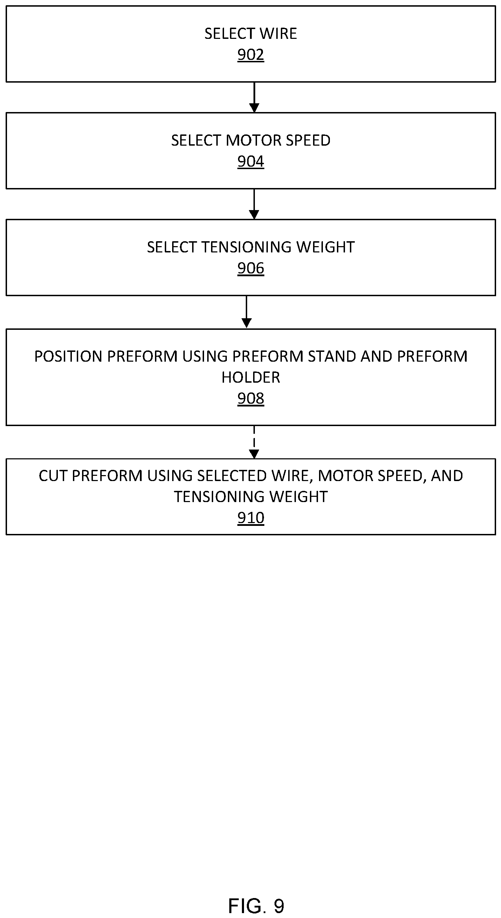

FIG. 9 is a flow diagram of a method for forming an end face of a glass preform using a diamond wire saw. At block 902, a wire is selected. In various examples, a diamond wire such as diamond wire 604 is selected for the diamond wire saw with a thickness (diameter) of 50 - 300 micrometers and a grain size of 15 - 80 micrometers. The grain size is smaller than the wire thickness. In examples the choice depends on the instrument and the diameter/geometry of the preform/cane being worked on. At block 904 a motor speed of a motor such as motor 618 of the diamond wire saw is selected. In various examples, a motor speed of 0.1 - 10 meters per second is selected. At block 906, a tensioning weight is selected. The tensioning weight is for example tensioning weight 608 in FIG. 6, and is a mass which, when suspended, induces tension in the diamond wire of the diamond wire saw. In examples, tensioning weight has a mass between 0 and 3 kg, depending on the preform diameter. At block 908, the preform is positioned using a preform stand such as preform stand 614 and a preform holder such as 606, 700. At block 910, the preform is cut using the selected wire, motor speed, and tensioning weight.

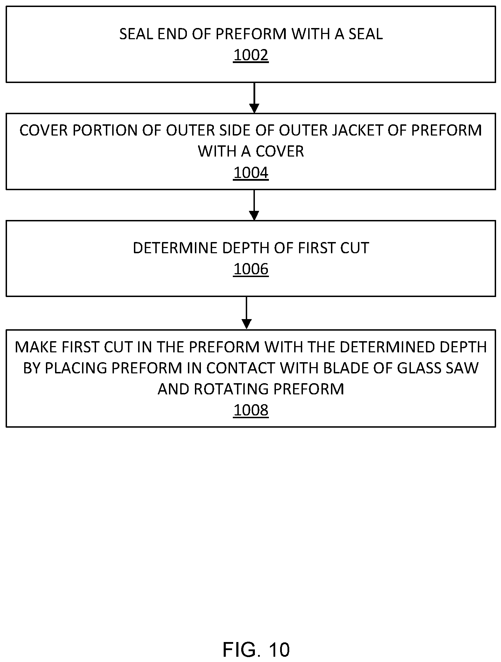

FIG. 10 is a flow diagram of a method for making a first annular cut such as cut 804 into a jacket tube of a glass preform using a glass saw. At block 1002, an end of the preform is sealed with a seal. At block 1004, a portion of an outer side of a jacket tube of a preform is covered with a cover. At block 1006 a depth of the first annular cut is determined. In the example in FIG. 10 the depth is determined by determining that an inner portion of the jacket tube remaining following the first cut has a thickness between 1mm and 50 mm for example. At block 1008, a first cut in the preform is made with the determined depth by placing the preform in contact with a blade of the glass saw and rotating the preform.

The methods disclosed herein operate in an unconventional manner to achieve improved preform preparation. A preform end face is produced (in other words formed) by cutting the preform. Forming an end face using the methods disclosed herein results in an end face which leads to reduced damage to the preform and/or fiber during fiber drawing when the end face is coupled to a pressurization system.

In various examples, the preform end face is textured for example using laser patterning. A patterned surface of the end face may mean that radiative heat can be scattered out from the preform more effectively (e.g. directed to a heat sink or a water cooled section of the pressure interface). During a typical draw, the perform is placed in the furnace which is operated at very high temperatures which produces a large amount of radiative heat. Infrared (IR) radiation can travel along the glass preform to the end face, where it may cause localized heating and cause stress in the glass. This may result in mechanical failure of the glass. Surface patterning at the end face or proximal to the end face provides a way to scatter infrared out of the preform, or to ensure it is directed to sections of the pressure interface where heat can be dissipated away without causing additional stress in the glass. IR radiation scattered out can be collected by heat sinks or other similar actively cooled arrangements within the pressure interface. Providing a patterned surface at or proximal to the end face allows IR radiation to be directed more efficiently to the heat sinks provided, thereby reducing the possibility of cracks appearing in the preform.

Disclosed above are methods for preparing a preform end face using a diamond wire saw and optionally a glass saw to produce a preliminary annular cut in a jacket tube of the preform. Disclosed herein are further methods for preparing a preform end face which are used in various example scenarios.

Further methods for preparing a preform end face include removing a portion of preform using a laser beam, a flame or plasma beam to direct energy onto the preform. In various examples, one or more laser beams may be used to cut through the complete preform cross section. In other examples, one or more laser beams are used to make a preliminary annular cut into a jacket tube of the preform. Other methods for preparing a preform end face by dividing the preform include first scoring the preform and then applying stress to cleave through the preform. Scoring may be performed using a diamond wire saw or laser, and produces a score (or notch) in or around the jacket tube of the preform. The scored preform may then be bent in order to divide the preform and produce an end face. Alternatively, once scored the preform may be tensioned or put under thermal shock in order to divide the preform and produce an end face. Other example methods of dividing a preform to produce a preform end face include but are not limited to using a water jet and a dicing saw.

In various example scenarios, voids within the preform may be filled with a filling material for a certain length prior to cutting, or scoring then applying stress. Filling voids with a filler may improve end face preparation using sawing. This is because damage to the microstructure caused by the diamond wire making contact with individual capillaries in reduced. Filling voids reduces stress and damage from the saw or wire to the delicate glass, and also prevents contamination from dust produced during sawing. When an end face is prepared by scoring and then applying stress to a preform, filling the voids assists the crack propagation across the preform once the stress is applied (via bending, tension, thermal shock, etc.). In an HCF preform, a crack cannot propagate in the hollow region. This means that the break may become very irregular near to the microstructure. The surface may not be flat, and spikes and cracks may appear which grow over time, particularly when heating during the draw. Filling the holes with a suitable material provides continuity for the shockwave to propagate across the full cross section of the preform, resulting in a more regular and more flat end face with fewer defects. A non-exhaustive list of fillers which may be used is: wax, resin, water, ice, glue.

In various examples where the end face is prepared using a diamond wire saw, suitable filler types include wax, resin, water, ice and glue. In various examples where the end face is prepared using scoring and bending, suitable filler types include wax, resin, water, ice and glue. In various examples where the end face is prepared using scoring and tensioning, suitable filler types include wax, resin, water, ice and glue. In various examples where the end face is prepared using a dicing saw, suitable filler types include resin, water, ice and glue. In various examples where the end face is prepared using a water jet, suitable filler types include resin, water, ice and glue.

Once the cut has been made through the preform, the filler is removed using a suitable technique. Suitable techniques include but are not limited to: using a solvent to dissolve the filler, heat treatment to melt the filler before removal, and radiation to melt the filler before removal. In various examples where the filler is wax, suitable filler removal techniques include solvent, heat treatment and radiation. In various examples where the filler is resin, suitable filler removal techniques include solvent, heat treatment and radiation. In various examples where the filler is water, suitable filler removal techniques include heat treatment. In various examples where the filler is ice, suitable filler removal techniques include heat treatment. In various examples where the filler is glue, suitable filler removal techniques include solvent, heat treatment and radiation.

Alternatively or in addition to the other examples described herein, examples include any combination of the following:
Clause A. A method for processing a glass preform for hollow core fiber, the method comprising:
   providing a length of glass preform for hollow core fiber from which a portion is to be removed in order to terminate the preform forming an end face, the preform comprising a transverse cross-sectional structure comprising a hollow core surrounded by a plurality of capillaries defining a plurality of voids encased by a jacket tube, wherein the hollow core and the plurality of voids extend longitudinally along the length of the preform;
   positioning the preform using a preform holder attached to a diamond wire saw, wherein the preform holder is configured to clamp the preform equally on both sides of a desired location for cutting; and
   cutting the preform in the desired location using the diamond wire saw.
Clause B. The method according to clause A, wherein cutting the preform in a desired location using a diamond wire saw further comprises one or more of:
   selecting a wire for the diamond wire saw with a thickness between 50 and 300 micrometers and a grain size between 5 and 80 micrometers, wherein the grain size is smaller than the wire thickness;
   selecting a motor speed between 0.1 and 10 meters per second for the diamond wire saw;
   selecting a weight with a mass between 0 and 3 kilograms for tensioning the wire; and
   cutting the preform using the selected wire, motor speed and/or tensioning weight to form an end face.
Clause C. The method according to clause B, wherein:
   the preform has an outer diameter of at least 50 millimeters, the selected motor speed is between 1.6 and 5 meters per second and the selected mass of the tensioning weight is 1 kilogram; or
   the preform has an outer diameter between 0.5 and 20 millimeters, the selected motor speed is between 0.6 and 3.6 meters per second, and no tensioning weight is selected.
Clause D. The method according to any of the preceding clauses, further comprising, prior to cutting the preform in a desired location using a diamond wire saw:
   positioning the preform using a preform stand and the preform holder, wherein the preform stand is configured to support the preform at a distance from the desired location.
Clause E. The method according to any of the preceding clauses, wherein the preform holder comprises a v-shaped groove for placing the preform and a lid for placing on top of the preform, the lid comprising a rubber layer
Clause F. The method according to any of the preceding clauses, further comprising:
   determining a tilt angle between 0 degrees and 10 degrees of the preform holder, tilting the preform holder according to the tilt angle so that the wire of the diamond wire saw is orthogonal to the central axis of the preform and cutting the preform using the diamond wire saw with the tilted preform holder.
Clause G. The method according to any of the preceding clauses, further comprising, after cutting the preform in a desired location using a diamond wire saw: cleaning debris from the end face comprises cleaning using a nitrogen jet or a vacuum suction device.
Clause H. The method according to any of the preceding clauses, further comprising, prior to cutting the preform in a desired location using a diamond wire saw, making a first annular cut into the jacket tube using a glass saw by:
   sealing an end of the preform with a seal;
   covering a portion of the outer side of the outer jacket of the preform with a cover;
   determining a depth of the first cut by determining that an inner portion of the jacket tube remaining following the first cut has a thickness between 1 mm and 50 mm; and
   making the first cut in the preform with the determined depth by placing the preform in contact with a blade of the glass saw and rotating the preform.
Clause I. The method according to clause I further comprising removing the cover from the preform and cleaning the preform using a solvent.
Clause J. The method according to clause H or I, further comprising cleaning the exposed first cut portion of the preform using a solvent.
Clause K. The method according to any of clauses H, I, or J, wherein the seal is PTFE tape or silicon rubber.
Clause L. The method according to any of clauses H, I, J, or K, wherein the cover is a plastic bag.
Clause M. The method according to any of the preceding clauses, wherein the structure of the preform is an antiresonant hollow core fiber structure comprising:
   a plurality of outer capillaries arranged in a ring around an inner surface of the tubular cladding, wherein the ring of outer capillaries defines the hollow core and the channel of the outer capillary defines a void of the plurality of voids;
   a plurality of middle capillaries each nested inside one of the plurality of outer capillaries, wherein the channel of the middle capillary defines a void of the plurality of voids; and
   a plurality of inner capillaries each nested inside one of the plurality of middle capillaries, wherein the channel of the inner capillary defines a void of the plurality of voids.
Clause N. A system for forming an end face of a glass preform, wherein the preform comprises a transverse cross-sectional structure comprising a hollow core surrounded by a plurality of capillaries defining a plurality of voids encased by a jacket tube, wherein the hollow core and the plurality of voids extend longitudinally along the length of the preform, the system comprising:
   a diamond wire saw; and
   a preform holder attached to the diamond wire saw, wherein the preform holder is configured to clamp the preform equally on both sides of a desired cutting location.
Clause O. The system according to clause N, wherein the diamond wire saw comprises:
   a diamond wire, the wire having a thickness between 50 and 300 micrometers and a grain size between 5 and 80 micrometers, wherein the grain size is smaller than the wire thickness;
   a motor configured to have a motor speed between 0.1 and 10 meters per second; and
   a weight with a mass between 0 and 3 kilograms for tensioning the wire.
Clause P. The system according to clause N or O, further comprising a glass saw for making a first annular cut into a jacket tube of the preform, the first cut having a depth determined by an inner portion of the jacket tube following the first cut having a thickness between 1 mm and 50 mm.
Clause Q. The system according to any of clauses N, O or P, further comprising a cleaning system for cleaning debris from the end face of the preform.
Clause R. The system according to any of clauses N, O, P or Q, wherein the preform holder is tilted at an angle between 0 degrees and 10 degrees so that the wire of the diamond wire saw is orthogonal to the central axis of the preform.
Clause S. The system according to any of clauses N, O, P, Q or R, wherein the preform holder comprises a v-shaped groove for placing the preform and a lid for placing on top of the preform, the lid comprising a rubber layer.
Clause T. The system according to any of clauses N, O, P, Q, R or S, further comprising a preform stand, wherein the preform stand is configured to support the preform at a distance from the desired cutting location.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method for processing a glass preform for hollow core fiber, the method comprising:
providing a length of glass preform for hollow core fiber (616, 708) from which a portion is to be removed in order to terminate the preform forming an end face, the preform comprising a transverse cross-sectional structure comprising a hollow core surrounded by a plurality of capillaries defining a plurality of voids encased by a jacket tube, wherein the hollow core and the plurality of voids extend longitudinally along the length of the preform;
positioning the preform using a preform holder attached to a diamond wire saw, wherein the preform holder (606, 700) is configured to clamp the preform equally on both sides of a desired location for cutting; and
cutting the preform in the desired location using the diamond wire saw (600).

2. The method according to claim 1, wherein cutting the preform in the desired location using the diamond wire saw further comprises one or more of:
selecting a wire for the diamond wire saw with a thickness between 50 and 300 micrometers and a grain size between 5 and 80 micrometers (902), wherein the grain size is smaller than the wire thickness;
selecting a motor speed between 0.1 and 10 meters per second for the diamond wire saw (904);
selecting a weight with a mass between 0 and 3 kilograms for tensioning the wire (906); and
cutting the preform using the selected wire, motor speed and/or tensioning weight to form an end face (910).

3. The method according to claim 2, wherein:
the preform has an outer diameter of at least 50 millimeters, the selected motor speed is between and 1.6 and 5 meters per second and the selected mass of the tensioning weight is 1 kilogram; or
the preform has an outer diameter between 0.5 and 20 millimeters, the selected motor speed is between 0.6 and 3.6 meters per second, and no tensioning weight is selected.

4. The method according to any of the preceding claims, further comprising, prior to cutting the preform in the desired location using the diamond wire saw:
positioning the preform using a preform stand and the preform holder (908), wherein the preform stand (614) is configured to support the preform at a distance from the desired location.

5. The method according to any of the preceding claims, wherein the preform holder (700) comprises a v-shaped groove for placing the preform and a lid for placing on top of the preform, the lid comprising a rubber layer.

6. The method according to any of the preceding claims, further comprising:
determining a tilt angle between 0 degrees and 10 degrees of the preform holder, tilting the preform holder according to the tilt angle so that the wire of the diamond wire saw is orthogonal to the central axis of the preform and cutting the preform using the diamond wire saw with the tilted preform holder.

7. The method according to any of the preceding claims, further comprising, after cutting the preform in the desired location using the diamond wire saw:
cleaning debris from the end face comprising cleaning using a nitrogen jet or a vacuum suction device.

8. The method according to any of the preceding claims, further comprising, prior to cutting the preform in the desired location using the diamond wire saw, making a first annular cut into the jacket tube using a glass saw by:
sealing an end of the preform with a seal (1002);
covering a portion of the outer side of the outer jacket of the preform with a cover (1004);
determining a depth of the first cut by determining that an inner portion of the jacket tube remaining following the first cut has a thickness between 1 mm and 50 mm (1006); and
making the first cut in the preform with the determined depth by placing the preform in contact with a blade of the glass saw and rotating the preform (1008).

9. The method according to claim 8 further comprising removing the cover from the preform and cleaning the preform using a solvent.

10. The method according to claim 8 or 9, further comprising cleaning the exposed first cut portion of the preform using a solvent.

11. The method according to any of claims 8-10, wherein the seal is PTFE tape or silicon rubber.

12. The method according to any of claims 8-11, wherein the cover is a plastic bag.

13. The method according to any of the preceding claims, wherein the structure of the preform is an antiresonant hollow core fiber structure comprising:
a plurality of outer capillaries arranged in a ring around an inner surface of the tubular cladding, wherein the ring of outer capillaries defines the hollow core and the channel of the outer capillary defines a void of the plurality of voids;
a plurality of middle capillaries each nested inside one of the plurality of outer capillaries, wherein the channel of the middle capillary defines a void of the plurality of voids; and
a plurality of inner capillaries each nested inside one of the plurality of middle capillaries, wherein the channel of the inner capillary defines a void of the plurality of voids.

14. A system for forming an end face of a glass preform, wherein the preform comprises a transverse cross-sectional structure comprising a hollow core surrounded by a plurality of capillaries defining a plurality of voids encased by a jacket tube, wherein the hollow core and the plurality of voids extend longitudinally along the length of the preform, the system comprising:
a diamond wire saw (600); and
a preform holder attached to the diamond wire saw, wherein the preform holder (606, 700) is configured to clamp the preform equally on both sides of a desired cutting location.

15. The system according to claim 14, wherein the diamond wire saw (600) comprises:
a diamond wire, the wire having a thickness between 50 and 300 micrometers and a grain size between 5 and 80 micrometers, wherein the grain size is smaller than the wire thickness;
a motor configured to have a motor speed between 0.1 and 10 meters per second; and
a weight with a mass between 0 and 3 kilograms for tensioning the wire.
